# EUROPÄISCHE PATENTANMELDUNG

(11) **EP 2 138 731 A1**
(43) Veröffentlichungstag der Anmeldung: **30.12.2009**
(21) Anmeldenummer: 09100341.8
(22) Anmeldetag: 17.06.2009
(51) Int. Cl.: F16C 33/08

(54) **Lagerbuchse sowie Lager**

(30) Priorität: 25.06.2008 DE 102008002643; 14.08.2008 DE 102008041271
(71) Anmelder: ROBERT BOSCH GMBH, 70442 Stuttgart (DE)
(72) Erfinder: Surkamp, Gundolf, 08720, Vilafranca Del Penedes (Barcel (ES); Boos, Tino, 76532, Baden-Baden (DE); Kraus, Achim, 77815, Buehl (DE)

(57) **Zusammenfassung**

Die Erfindung betrifft eine Lagerbuchse (1) zum drehbaren Lagern einer Welle, vorzugsweise einer Wischerwelle, umfassend einen am Außenumfang (5) angeordneten Pressabschnitt (4) zum Herstellen eines Presssitzes in einer Aufnahmeöffnung, und einen am Innenumfang angeordneten Laufflächenabschnitt (3) für die Welle. Erfindungsgemäß ist vorgesehen, dass der Pressabschnitt (4) axial zu dem Laufflächenabschnitt (3) versetzt angeordnet ist.

## Beschreibung

### Stand der Technik

Die Erfindung betrifft eine Lagerbuchse zum drehbaren Lagern einer Welle, vorzugsweise einer Wischerwelle in einem Kraftfahrzeug, gemäß dem Oberbegriff des Anspruchs 1 sowie ein Lager, insbesondere ein Wischerwellenlager, gemäß Anspruch 10.

Scheibenwischerantriebe nach dem heutigen Stand der Technik sind mit einem zwei Lagebuchsen aufweisenden Wischerlager ausgestattet. Aufgabe der Lagerbuchsen ist es, die Wischerwelle während ihrer Pendelbewegung zu führen. In der Praxis zum Einsatz kommende Lagerbuchsen sind dabei als Sinterteile aus Sinterwerkstoffen ausgebildet, die mit Schmierstoffen getränkt sind. Aufgrund diverser Toleranzen, beispielsweise des Außen- und Innendurchmessers der Lagerbuchse, des Innendurchmessers eines Wischerlagergehäuses sowie im Hinblick auf die Koaxialität zwischen zwei in axialer Richtung fluchtender Lagerbuchsen müssen diese nach erfolgtem Einpressen in ein rohrförmiges Wischerlagergehäuse an ihrem Innendurchmesser mit Hilfe eines Kalibrierdorns kalibriert (ausgerichtet) werden. Dieser notwendige Kalibrierschritt verzögert die Montage und verteuert diese dadurch.

### Offenbarung der Erfindung

### Technische Aufgabe

Der Erfindung liegt die Aufgabe zugrunde, eine verbesserte Lagerbuchse vorzuschlagen, durch deren Einsatz auf einen Kalibriervorgang unter Einsatz eines Kalibrierdorns verzichtet werden kann. Bevorzugt soll auch die Montage einer derartigen, verbesserten Lagerbuchse vereinfacht sein. Ferner besteht die Aufgabe darin, ein Lager, insbesondere ein Wischerwellenlager vorzuschlagen, bei dessen Montage auf einen Kalibriervorgang der Lagerbuchsen verzichtet werden kann.

### Technische Lösung

Diese Aufgabe wird hinsichtlich der Lagerbuchse mit den Merkmalen des Anspruchs 1 und hinsichtlich des Lagers mit den Merkmalen des Anspruchs 10 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Die in der vorliegenden Anmeldung offenbarten Abmessungen sowie sich daraus ergebende Verhältniswerte sollen als bevorzugte Ausführungsform(en) der Lagerbuchse offenbart gelten und beanspruchbar sein.

Der Erfindung liegt der Gedanke zugrunde, den Pressabschnitt der Lagerbuchse, mittels dem die Lagerbuchse durch Einpressen in einer Aufnahmeöffnung, insbesondere in einem Wischerwellenlagergehäuse, festlegbar ist, von dem eine Lauffläche für die zu lagernde Welle aufweisenden Laufflächenabschnitt geometrisch zu entkoppeln. Hierdurch wird erreicht, dass eine Formänderung des Pressabschnittes durch den Einpressvorgang aufgrund des toleranzbehafteten Pressabschnittaußendurchmessers und aufgrund des ebenfalls toleranzbehafteten Aufnahmeöffnungsdurchmessers zumindest nahezu keinen Einfluss auf die Form der Lauffläche des Laufflächenabschnittes hat. Anders ausgedrückt wirken sich Toleranzen im Bereich des Außenumfangs der Lagerbuchse, genauer am Außenumfang des Pressabschnittes, bei einer nach dem Konzept der Erfindung ausgebildeten Lagerbuchse nicht oder nur unwesentlich auf das Radialspiel zwischen dem Innenumfang des Laufflächenabschnittes und der zu lagernden Welle aus, wodurch auf einen Kalibriervorgang nach der Montage der Lagerbuchse verzichtet werden kann. Ganz besonders bevorzugt handelt es sich, wie später noch erläutert werden wird, um eine Lagerbuchse aus einem Sinterwerkstoff, da die Porosität des Sinterwerkstoffs toleranzbedingte Formänderungen vom Presssitz zur Lauffläche zusätzlich vermindert. Darüber hinaus kann das Sintermaterial nach entsprechender Tränkung mit Schmierstoff als Schmierstofflager dienen.

Konstruktiv wird die Entkopplung des Pressabschnittes von dem Laufflächenabschnitt dadurch erreicht, dass der Pressabschnitt nicht mehr wie im Stand der Technik radial außerhalb des Laufflächenabschnittes realisiert ist, der Pressabschnitt und der Laufflächenabschnitt sich also nicht in axialer Richtung überschneiden, sondern axial versetzt zueinander angeordnet sind.

Besonders bevorzugt ist eine Ausführungsform der Lagerbuchse, bei der die Lagerbuchse zur Entkopplung des Pressabschnittes von dem Laufflächenabschnitt an ihrem Außenumfang gestuft ausgeformt ist, also mindestens zwei, vorzugsweise ausschließlich zwei, radial zueinander versetzte zylindrische Bereiche mit unterschiedlichen Durchmessern aufweist, wobei der größere Durchmesser am Außenumfang des Pressabschnittes zum Herstellen eines Presssitzes mit dem Innenumfang der Aufnahmeöffnung realisiert ist. Unter einer gestuften Ausführung der Lagerbuchse wird nicht nur ein im Wesentlichen rechtwinkliger Übergang zwischen den beiden Durchmesserabschnitten verstanden, sondern auch ein schräger (z.B. konischer) oder gekrümmter (z.B. konkaver oder konvexer) Übergang. Anders ausgedrückt, ist die Lagerbuchse bevorzugt derart ausgebildet, dass dem äußeren Presssitz radial innen Spiel zur Welle gegenübersteht und der radial inneren Lauffläche Spiel radial außen zum Innenumfang der, insbesondere in einem Wischerlagergehäuse ausgebildeten, Aufnahmeöffnung.

In Weiterbildung der Erfindung ist mit Vorteil vorgesehen, dass der Außendurchmesser des Pressabschnittes (minimal) größer ist als der Außendurchmesser der Lagerbuchse radial außerhalb des Laufflächenabschnittes. Darüber hinaus ist der Innendurchmesser der die Lagerbuchse durchsetzenden Durchgangsöffnung (Bohrung) radial innerhalb des Pressabschnittes größer als der Innendurchmesser des Laufflächenabschnittes um ein Anliegen der Welle an der Lagerbuchse im Bereich des Pressabschnittes zu verhindern, um Auswirkungen auf die Lagereigenschaften durch eine Formveränderung des Pressabschnittes beim Einpressvorgang bzw. durch den Einpressvorgang zu vermeiden.

Ganz besonders bevorzugt ist die Differenz der Außendurchmesser der axial versetzten zylindrischen Abschnitte aus einem Wertebereich zwischen etwa 0,05mm und etwa 0,20mm, vorzugsweise zwischen etwa 0,06mm und etwa 0,12mm, gewählt.

Ganz besonders bevorzugt beträgt die Außendurchmesserdifferenz (Pressabschnitt/Laufflächenabschnitt) etwa 0,08mm.

Weiterhin ist eine Ausführungsform der Lagerbuchse bevorzugt, bei der die Differenz der Innendurchmesser (Laufflächenabschnitt/ Pressabschnitt) aus einem Wertebereich zwischen etwa 0,10mm und etwa 0,40mm, vorzugsweise aus einem Bereich zwischen etwa 0,15mm und etwa 0,35mm, gewählt ist. Ganz besonders bevorzugt beträgt die Differenz etwa 0,20mm.

In Weiterbildung der Erfindung ist mit Vorteil vorgesehen, dass der Laufflächenabschnitt und der Pressabschnitt, zumindest in etwa, gleich lang sind, wobei die jeweilige Länge vorzugsweise aus einem Wertebereich zwischen 3mm bis 7mm gewählt ist. Ganz besonders bevorzugt beträgt sowohl die Länge des Laufflächenabschnittes als auch die Länge des Pressabschnittes etwa 5mm.

Ferner ist eine Ausführungsform bevorzugt, bei der die Gesamtaxialerstreckung der Lagerbuchse aus einem Wertebereich zwischen etwa 8mm und etwa 16mm, vorzugsweise aus einem Wertebereich zwischen etwa 10mm und etwa 14mm, gewählt ist. Ganz besonders bevorzugt beträgt die Axialerstreckung etwa 12mm.

Eine optimierte Entkopplung von Pressabschnitt und Laufflächenabschnitt kann dadurch erzielt werden, dass ein Durchmessersprung am Außenumfang nicht unmittelbar radial außerhalb eines Durchmessersprungs am Innenumfang der Lagerbuchse angeordnet ist, sondern dass die, bevorzugt konisch ausgeformten Durchmessersprünge in axialer Richtung versetzt zueinander angeordnet sind, so dass axial zwischen den Durchmessersprüngen ein axialer, vorzugsweise zylindrischer, Ausgleichabschnitt (Übergangsabschnitt) gebildet ist, der die Entkopplung des sich während des Einpressens verformenden Pressabschnittes von dem Laufflächenabschnitt sicherstellt.

Ganz besonders bevorzugt ist eine Ausführungsform, bei der die Lagerbuchse als Sinterbauteil, also aus einem Sinterwerkstoff, vorzugsweise aus Sinterbronze, ausgebildet ist, da durch die Porosität dieses Werkstoffes toleranzbedingte Formänderungen vom Pressabschnitt (Presssitz) zur Lauffläche (Laufflächenabschnitt) minimiert werden.

Die Erfindung führt auch auf ein Lager, insbesondere ein Wischerwellenlager, bei dem eine Welle, insbesondere eine Wischerwelle, mit mindestens einer zuvor beschriebenen Lagerbuchse, vorzugsweise mit zwei wie zuvor beschrieben ausgebildeten, in axialer Richtung beabstandeten Lagerbuchsen gelagert ist, wobei die mindestens eine Lagerbuchse mit ihrem Pressabschnitt in einer Aufnahmeöffnung mittels eines Presssitzes aufgenommen ist. Dabei befindet sich die Aufnahmeöffnung vorzugsweise in einem, vorzugsweise rohrförmigen, Wischerwellenlagergehäuse. Durch die geometrische Entkopplung des Pressabschnittes der Lagerbuchse von deren Laufflächenabschnitt verhindert wird, dass toleranzbedingte Formänderungen des Pressabschnittes zum Laufflächenabschnitt übertragen werden können, so dass sich Pressabschnitttoleranzen nicht auf das Radialspiel zwischen der Lauffläche der Lagerbuchse und der Welle auswirken.

### Kurze Beschreibung der Zeichnungen

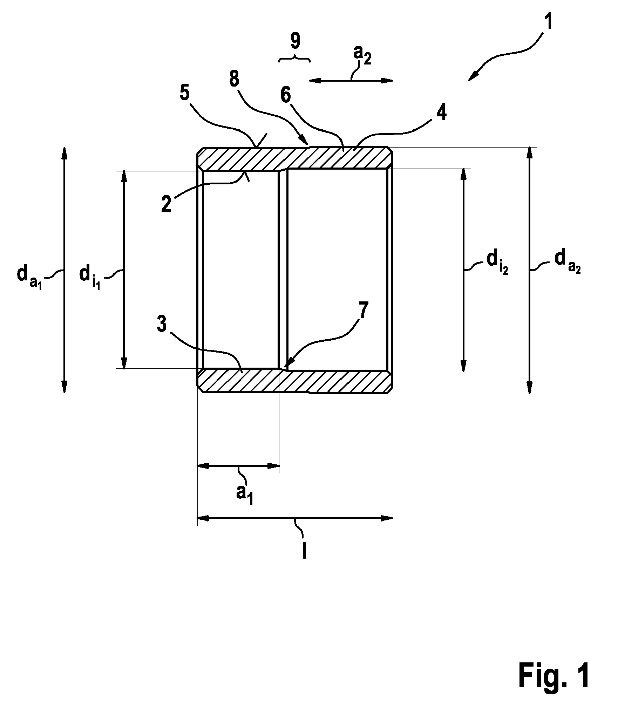

Weitere Vorteile, Merkmale und Einzelheiten der Erfindung ergeben sich aus der nachfolgenden Beschreibung eines bevorzugten Ausführungsbeispiels sowie anhand der Zeichnung. Diese zeigt in der einzigen
- Fig. 1:: eine Längsschnittansicht einer Lagerbuchse, bei der ein Pressabschnitt von einem Laufflächenabschnitt geometrisch entkoppelt ist.

### Ausführungsform der Erfindung

In Fig. 1 ist in einer Längsschnittansicht eine Lagerbuchse 1 aus Sintermaterial zum Lagern einer nicht gezeigten zylindrischen Welle gezeigt. Die Lagerbuchse 1 wird bevorzugt zur Minimierung der Lagerreibung mit Schmierstoff getränkt, wobei der Sinterwerkstoff in diesem Fall aufgrund seiner Porosität als Schmierstofflager dient und im Laufe des Lagerbuchsenlebens Schmierstoff kontinuierlich an eine Lauffläche 2 der Lagerbuchse 1 abgibt.

Wie sich aus Fig. 1 ergibt, umfasst die hülsenförmige Lagerbuchse 1 einen in der Zeichnungsebene linken Laufflächenabschnitt 3 mit der bereits erwähnten, umfangsgeschlossenen Lauffläche 2 sowie einen axial zum Laufflächenabschnitt 3 bzw. zur Lauffläche 2 versetzten Pressabschnitt 4 mit einer am Außenumfang 5 angeordneten zylinderförmigen Pressfläche 6 zum Zusammenwirken mit einem nicht gezeigten Innenumfang einer Aufnahmeöffnung zur Aufnahme der Lagerbuchse 1.

Wie sich weiter aus Fig. 1 ergibt, entspricht die Axialerstreckung a₁ des Laufflächenabschnittes 3 und damit die Axialerstreckung der zylindrischen Lauffläche 2 der Axialerstreckung a₂ des Pressabschnittes 4 und damit der Axialerstreckung der zylindrischen Pressfläche 6 von in dem gezeigten Ausführungsbeispiel 5mm. Wie sich weiterhin aus Fig. 1 ergibt, ist der Innendurchmesser dᵢ₁ des Laufflächenabschnittes 3 etwas kleiner als der Innendurchmesser dᵢ₂ radial innerhalb der Pressfläche 6, so dass bei einer montierten Lagerbuchse 1 die Welle nur im Bereich des Laufflächenabschnittes 3 an der Lagerbuchse 1 anliegt und mit Radialabstand zu dem Innenumfang der Durchgangsöffnung der Lagerbuchse 1 radial innerhalb des Pressabschnittes 4 angeordnet ist.

Ferner wird aus Fig. 1 deutlich, dass ein innerer Durchmessersprung 7, der den Laufflächenabschnitt 3 in axialer Richtung begrenzt, konisch ausgeformt ist. In dem gezeigten Ausführungsbeispiel beträgt der Innendurchmesser dᵢ₁ 12, 11mm, wohingegen der Innendurchmesser dᵢ₂ 12,33mm beträgt. Hieraus ergibt sich, dass zwischen den Innendurchmessern dᵢ₁ und dᵢ₂ eine Differenz von 0,22mm realisiert ist. Der Außendurchmesser dₐ₁ der Lagerbuchse 1 radial außerhalb der Lauffläche 2 beträgt in dem gezeigten Ausführungsbeispiel 14,92mm, wohingegen der Außendurchmesser dₐ₂ des Pressabschnittes 4 15mm beträgt, so dass zwischen den Außendurchmessern dₐ₁ und dₐ₂ eine Differenz von 0,08mm realisiert ist - also eine erheblich geringere Differenz als zwischen den Innendurchmessern dᵢ₁ und dᵢ₂. Die Länge 1 (Axialerstreckung) der Lagerbuchse 1 beträgt 12mm.

Am Außenumfang 5 der Lagerbuchse 1 ist ein äußerer Durchmessersprung 8 realisiert und zwar zwischen einem Außendurchmesser dₐ₁ radial außerhalb des Laufflächenabschnittes 3 und einem Außendurchmesser dₐ₂ des Pressabschnittes 4. Der äußere Durchmessersprung 8 begrenzt dabei den Pressabschnitt 4 in axialer Richtung.

Aus Fig. 1 ist ferner zu entnehmen, dass die Durchmessersprünge 7, 8 in axialer Richtung versetzt angeordnet sind, so dass ein den Pressabschnitt 4 von dem Laufflächenabschnitt 3 entkoppelnder Ausgleichabschnitt 9 axial zwischen den Durchmessersprüngen 7, 8 bzw. dem Laufflächenabschnitt 3 und dem Pressabschnitt 4 gebildet ist.

Wie sich weiterhin aus Fig. 1 ergibt, ist die Lagerbuchse 1 an ihren Stirnseiten sowohl radial innen als auch radial außen unter einem Winkel von 45° angefast, wobei sämtliche Fasen eine Axialerstreckung von 0,3mm aufweisen.

## Patentansprüche

1. Lagerbuchse zum drehbaren Lagern einer Welle, vorzugsweise einer Wischerwelle, umfassend einen am Außenumfang (5) angeordneten Pressabschnitt (4) zum Herstellen eines Presssitzes in einer Aufnahmeöffnung, und einen am Innenumfang angeordneten Laufflächenabschnitt (3) für die Welle,
**dadurch gekennzeichnet,**
**dass** der Pressabschnitt (4) axial zu dem Laufflächenabschnitt (3) versetzt angeordnet ist.

2. Lagerbuchse nach Anspruch 1,
**dadurch gekennzeichnet,**
**dass** die Lagerbuchse (1) sowohl am Außenumfang (5) als auch am Innenumfang gestuft ausgeformt ist.

3. Lagerbuchse nach einem der Ansprüche 1 oder 2,
**dadurch gekennzeichnet,**
**dass** der Außendurchmesser (dₐ₂) des Pressabschnittes (4) größer ist als der Außendurchmesser (dₐ₁) der Lagerbuchse (1) radial außerhalb des Laufflächenabschnittes (3), und dass der Innendurchmesser (dᵢ₂) der Lagerbuchse (1) radial innerhalb des des Pressabschnittes (4) größer ist als der Innendurchmesser (dᵢ₁) des Laufflächenabschnittes (3).

4. Lagerbuchse nach Anspruch 3,
**dadurch gekennzeichnet,**
**dass** die Differenz zwischen den Außendurchmessern (dₐ₂ und dₐ₁) aus einem Wertebereich zwischen etwa 0,05mm und etwa 0,20mm, vorzugsweise zwischen etwa 0,06mm und etwa 0,12mm gewählt ist.

5. Lagerbuchse nach einem der Ansprüche 3 oder 4,
**dadurch gekennzeichnet,**
**dass** die Differenz zwischen den Innendurchmessern (dᵢ₂ und dᵢ₁) aus einem Wertebereich zwischen etwa 0,10mm und etwa 0,40mm, vorzugsweise zwischen etwa 0,15mm und etwa 0,35mm gewählt ist.

6. Lagerbuchse nach einem der vorhergehenden Ansprüche,
**dadurch gekennzeichnet,**
**dass** die Axialerstreckung des Laufflächenabschnittes (3) zumindest näherungsweise der Axialerstreckung des Pressabschnittes (4), vorzugsweise von etwa 3mm bis 7mm, bevorzugt von etwa 5mm entspricht.

7. Lagerbuchse nach einem der vorhergehenden Ansprüche,
**dadurch gekennzeichnet,**
**dass** die Länge (1) der Lagerbuchse (1) aus einem Wertebereich zwischen etwa 8mm und etwa 16mm, vorzugsweise zwischen etwa 10mm und etwa 14mm gewählt ist.

8. Lagerbuchse nach einem der vorhergehenden Ansprüche,
**dadurch gekennzeichnet,**
**dass** ein, insbesondere konischer, Durchmessersprung am Außenumfang der Lagerbuchse (1) axial zu einem, insbesondere konischen, Durchmessersprung am Innenumfang versetzt ist.

9. Lagerbuchse nach einem der vorhergehenden Ansprüche,
**dadurch gekennzeichnet,**
**dass** die Lagerbuchse als Sinterbauteil, vorzugsweise aus Sinterbronze, ausgebildet ist.

10. Lager, insbesondere Wischerwellenlager, mit mindestens einer Welle, insbesondere einer Wischerwelle, die mit mindestens einer Lagerbuchse (1) nach einem der vorhergehenden Ansprüche gelagert ist, wobei die Lagerbuchse (1) mit ihrem Pressabschnitt (4) in eine Aufnahmeöffnung, insbesondere in einem Wischerwellenlagergehäuse, eingepresst ist.
